# EUROPEAN PATENT SPECIFICATION

(11) **EP 0 806 617 B1**
(45) Date of publication and mention of the grant of the patent: **19.12.2001**
(21) Application number: 97104384.9
(22) Date of filing: 14.03.1997
(51) Int. Cl.: F25B 39/02, B21D 53/08, B23P 15/26

(54) **Method for producing evaporators for refrigeration circuits, and the evaporator obtained**
Verfahren zur Herstellung von Verdampfern für Kältekreisläufe,und der hergestellte Verdampfer
Procédé pour la fabrication des évaporateurs pour circuits frigorifiques, et l'évaporateur obtenu

(30) Priority: 06.05.1996 IT MI960895
(43) Date of publication of application: 12.11.1997
(73) Proprietor: WHIRLPOOL CORPORATION, Benton Harbor Michigan 49022 (US)
(72) Inventor: Gasperini, Sergio, c/o Whirlpool Europe s.r.l., 21024 Biandronno (IT); Scomazzon, Angelo, c/o Whirlpool Europe s.r.l., 21024 Biandronno (IT)
(74) Representative: Guerci, Alessandro

(56) References cited:
- DE-A- 2 020 205
- FR-A- 2 541 759
- GB-A- 679 450
- GB-A- 826 625
- GB-A- 1 432 134
- US-A- 1 800 150
- US-A- 4 072 262

## Description

This invention relates to a method for producing evaporators for refrigeration circuits, in particular for domestic refrigerators.

It also relates to the evaporator obtained. Both the method and the resultant evaporator are of the type stated in the introduction to the accompanying main claims, to which reference should be made.

GB-A-1 432 134 discloses a method in which the tubing of an heat exchanger and an adhesive are disposed between two metal sheets, these latter being subsequently pressed together to deform at least one of the sheets. FR-A-2 541 759 discloses an evaporator comprising a metallic plate supporting the coil, and a plastic heat shrinkable sheet covering the coil and the plate. Document GB-A-769 929 describes a method for producing an evaporator by pressing tightly the evaporator coil into grooves of a first plate. These grooves have to be manufactured on the plate before the pressing operation.

The main object of the present invention is to provide a method enabling economical evaporators to be produced which are more adaptable to the refrigerator compartment even if the surfaces of this latter are not flat, are not dependent on the manual ability of the operator (an hence free from problems of inadequate repeatability) and are able to be assembled as an independent component (and transportable as such for example to another factory), and moreover providing more effective heat absorption from the refrigerator compartment.

This and further objects which will be apparent from the ensuing description are attained by a method and evaporator in accordance with the teachings of the accompanying claims.

The invention will be more apparent from the detailed description of a preferred embodiment thereof given hereinafter by way of non-limiting example and illustrated on the accompanying drawing, in which:
Figure 1 is an example of a hairpin coil forming part of the evaporator of the invention;
Figure 2 is a schematic perspective view of the tool used to implement the method of the invention;
Figure 3 is a schematic cross-section through the tool during a first stage of the method of the invention;
Figure 4 shows the same section as Figure 3 during another stage of the method of the invention;
Figure 5 is a detailed partial cross-section through the evaporator on termination of the method of the invention, before the evaporator is removed from the tool;
Figure 6 is a schematic cross-section through the evaporator obtained.

In the figures, the reference numeral 1 indicates the hairpin coil which constitutes the basic element of the evaporator. It comprises a series of rectilinear portions 1A connected together by curved portions 1B and approximately parallel to each other.

The hairpin coil is formed from a tube the cross-section through which (see Figure 5) comprises an arcuate part 2 (preferably in the form of a circular arc) and a flat part 3. The manner in which the tube is bent into hairpin form is conventional and will not be described.

The evaporator of the invention also comprises two thin metal sheets 4, 5, for example of aluminium, having a thickness for example of 0.15 mm, these being applied to opposite sides of the hairpin coil. The sheets 4, 5 adhere to the hairpin coil and together in that one of them (ie the sheet 5) is provided with a layer of adhesive (5A in Figure 5 in which this layer is represented by a thicker line). In addition, the sheet 5 which adheres to the flat part 3 of the tube forming the hairpin coil is also provided with a layer of adhesive 5B on its outer face, this layer being protected by a repellent sheet 6 (for example of silicone-coated paper) which is removed when the evaporator is to be fitted to the refrigerator compartment, the outer layer of adhesive (5B) then remaining joined to the compartment.

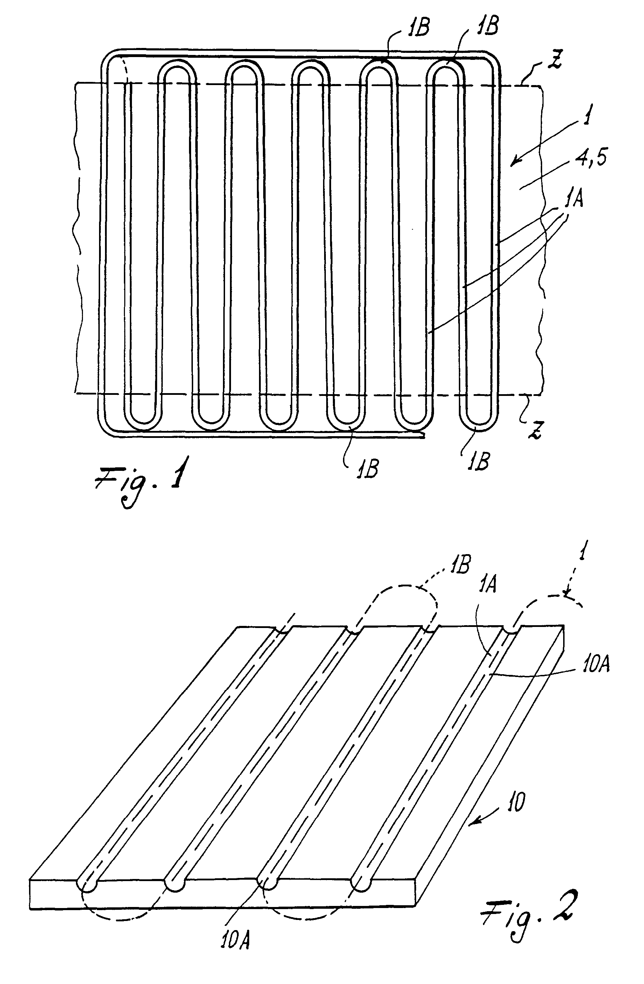

The metal sheets 4, 5 are preferably dimensioned so as to cover the rectilinear portions 1A but not the curved connection portions 1B, as shown in Figure 1, in which the edges of the sheets are shown by dashed lines and indicated by Z.

The method for producing the evaporator of the invention uses a tool or template 10, shown schematically in perspective view in Figure 2 and being in the form of a plate provided with a series of rectilinear grooves 10A corresponding, in terms of arrangement and length, with the rectilinear portions 1A of the hairpin coil 1 and having a cross-section substantially the same as the tube of the hairpin coil (as can be seen from Figure 5).

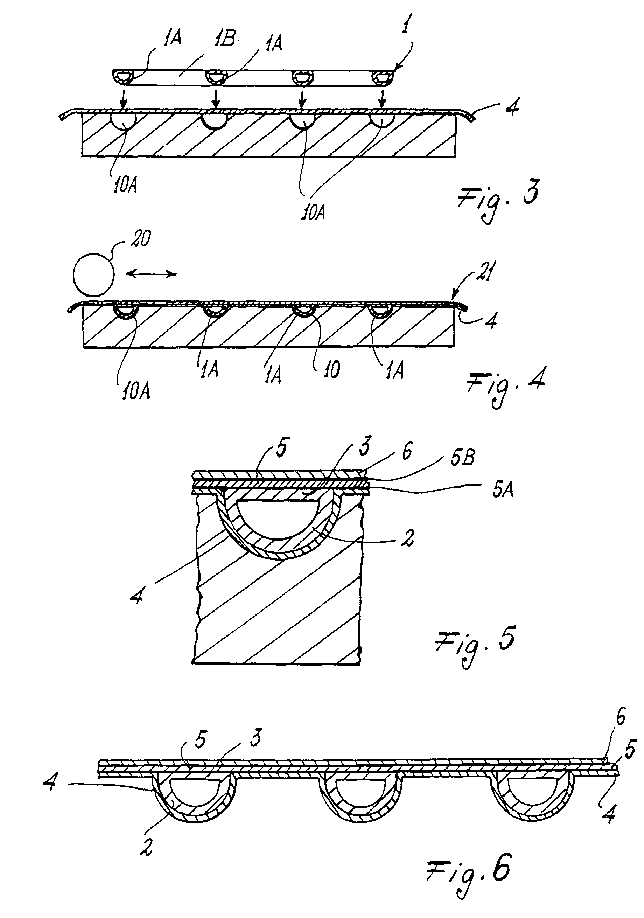

The flat metal sheet 4 is rested on the tool 10 (Figure 3). On the tool covered in this manner there is placed the hairpin coil 1 such that its rectilinear portions 1A coincide with the grooves 10A in the tool.

Using presser means, for example a roller 20, the rectilinear portions 1A of the hairpin coil are pressed into the grooves 10A in the tool (Figure 4) to at the same time obtain permanent deformation of the sheet 4 and its application to the wall of said grooves.

After this pressing operation and consequent shaping of the sheet 4 on the hairpin coil 1, the resultant unit on the tool 10 has an outer surface 21 which can be considered substantially flat.

The sheet 5, provided with the adhesive layer (5A, 5B) on both its faces, one of which is protected by the repellent silicone-coated sheet 6, is spread over the surface 21 with that face not protected by the silicone-coated sheet 6 in contact with said surface.

Then in the aforestated manner, ie by exerting pressure on the sheet 5 through the silicone-coated protection sheet 6, an intimate joint is achieved via the adhesive between the sheet 5, the flat part 3 of the tube of the hairpin coil and the sheet 4 (where the sheet 5 adheres to this), as shown in Figure 5.

The evaporator is hence complete and is removed from the tool on which it has been produced, ready for application to the refrigerator compartment itself when the refrigerator production requires it, after removing the protective silicone-coated layer 6, by applying thereto that side of the adhesive layer 5B of the metal sheet 5 which was previously protected by the silicone-coated sheet.

When applying the evaporator to refrigerator compartments for example of polymer material, it can be easily shaped and adapted to the compartment surface.

The evaporator produced by the method of the invention has the merit of being an independent component which can be stored or transferred to another factory, and is repeatable in the sense that each evaporator is identical to the others.

Although the evaporator of the invention has been described with reference to a hairpin coil formed from a tube of substantially semicircular cross-section, the advantages of the invention can also be obtained with tubes of different cross-section, for example elliptical, and with tools or templates which also involve the curved portions 1B of the hairpin coil 1.

## Claims

1. A method for producing evaporators for refrigerators, especially domestic refrigerators, said evaporators comprising a hairpin coil (1) having rectilinear portions (1A) interposed between and coupled to two metal sheets by means of an adhesive and by deforming at least one of said sheets in correspondence with zones of contact with the hairpin coil (1), **characterised in that** the hairpin coil (1) is coupled to a first metal sheet (4) by deforming such first sheet by pressing the hairpin coil (1) into grooves (10A) of a tool (10) and then coupled to a second metal sheet (5) having two adhesive-coated faces (5A, 5B), one of the adhesive-coated faces (5B) of the second metal sheet (5) being used for fixing the evaporator to a refrigerator compartment.

2. A method as claimed in claim 1, **characterised in that** the second metal sheet (5) is protected on one face (5B) by a removable sheet (6) repellent to the adhesive.

3. A method as claimed in claim 2, **characterised in that** the tool (10) is provided with rectilinear grooves (10A) corresponding substantially to rectilinear portions (1A) of the hairpin coil (1) and to the cross-section through the relative tube, on said tool (10) there being firstly laid the first metal sheet (4) and then the hairpin coil (1), the rectilinear portions (1A) of which are pressed into said rectilinear grooves (10A) to obtain a unit having a substantially flat exposed surface on which is applied the second sheet (5), the outer face of which is protected by the repellent sheet (6).

4. An evaporator for refrigerators, in particular domestic refrigerators, manufactured according to a method of claim 1, in which a hairpin coil (1) is interposed between two metal sheets (4, 5), a first sheet (4) which has been deformed into the grooves (10A) of a tool (10) by pressing with the hairpin coil (1), said first sheet (4) being provided with shaped portions cooperating with the hairpin coil, the second metal sheet (5) being coupled to the first sheet by means of an adhesive, wherein the second sheet (5) is adhesive-coated on both sides (5A, 5B), one (5A) of said sides being flat and being rigid with the hairpin coil and with the first metal sheet (4) and the other enabling the evaporator to be fixed to a member or structure of the refrigerator.

5. An evaporator for refrigerators as claimed in claim 4, **characterised in that** one (5B) of the sides of the second sheet (5) is protected by a removable repellent sheet (6).

6. An evaporator for refrigerators as claimed in claim 4, **characterised in that** the hairpin coil (1) is formed from a tube having an arcuate part (2) and a flat part (3), the first metal sheet cooperating with the arcuate part of the tube of the hairpin coil (1), the second metal sheet (5), which is flat and adhesive-coated on both its sides, being rigidly joined to the flat part (2) of the tube of the hairpin coil (1).

## Patentansprüche

1. Verfahren zur Herstellung von Verdampfern für Kältemaschinen, insbesondere Haushaltskältemaschinen, wobei die Verdampfer eine Haarnadel-Rohrschlange (1) mit geradlinigen Teilen (1A) aufweisen, die zwischen zwei Metallblechen angeordnet sind und mit diesen mittels eines Klebstoffs und durch Verformen von mindestens einem der Metallbleche in Verbindung mit Zonen des Kontakts mit der Haarnadel-Rohrschlange (1) verbunden sind,
**dadurch gekennzeichnet,**
**dass** die Haarnadel-Rohrschlange (1) mit einem ersten Metallblech (4) derart gekoppelt wird, dass dieses erste Metallblech durch Pressen der Haarnadel-Rohrschlange (1) in Nuten (10A) eines Werkzeugs (10) verformt wird, und dass die Haarnadel-Rohrschlange (1) dann mit einem zweiten Metallblech (5) verbunden wird, das zwei mit Klebstoff beschichtete Flächen (5A, 5B) aufweist, von denen die eine (5B) zur Befestigung des Verdampfers in einem Kühlfach der Kältemaschine verwendet wird.

2. Verfahren nach Anspruch 1,
**dadurch gekennzeichnet,**
**dass** das zweite Metallblech (5) auf seiner einen Seite (5B) durch eine entfernbare Folie (6) geschützt ist, die Verunreinigungen vom Klebstoff fernhält.

3. Verfahren nach Anspruch 2,
**dadurch gekennzeichnet,**
**dass** das Werkzeug (10) mit geradlinigen Nuten (10A) versehen ist, die im Wesentlichen mit den geradlinigen Teilen (1A) der Haarnadel-Rohrschlange (1) und mit dem Querschnitt durch das betreffende Rohr übereinstimmen, dass auf das Werkzeug (10) zuerst das erste Metallblech (4) und dann die Haarnadel-Rohrschlange (1) gelegt wird, dass die geradlinigen Teile (1A) dieser Rohrschlange in die geradlinigen Nuten (10A) derart gepresst werden, dass eine Einheit mit im Wesentlichen eben verlegter Fläche gebildet wird, und dass auf diese Fläche das zweite Metallblech (5) gelegt wird, dessen Außenfläche mit der Schutzfolie (6) geschützt ist.

4. Verdampfer für Kältemaschinen, insbesondere Haushaltskältemaschinen, der nach dem Verfahren des Anspruchs 1 hergestellt ist, wobei der Verdampfer eine Haarnadel-Rohrschlange (1) aufweist, die zwischen zwei Metallblechen (4, 5) angeordnet ist, wobei ferner ein erstes Metallblech (4), das in Nuten (10A) eines Werkzeugs (10) durch Pressen der Haarnadel-Rohrschlange (1) verformt worden ist, mit geformten Teilen versehen ist, die mit der Haarnadel-Rohrschlange zusammenwirken, wobei ferner das zweite Metallblech (5) mit dem ersten Metallblech (4) mittels eines Klebstoffs verbunden ist, und wobei ferner das zweite Metallblech (5) auf seinen beiden Seiten (5A, 5B) mit Klebstoff beschichtet ist, von denen die eine (5A) eben und mit der Haarnadel-Rohrschlange und mit dem ersten Metallblech (4) fest verbunden ist und von denen die andere (5B) den Verdampfer an ein Glied oder Bauteil der Kältemaschiene befestigen kann.

5. Verdampfer für Kältemaschinen nach Anspruch 4,
**dadurch gekennzeichnet,**
**dass** die eine Seite (5B) der beiden Seiten des zweiten Metallblechs (5) durch eine entfernbare, Verunreinigungen abweisende Folie (6) geschützt ist.

6. Verdampfer für Kältemaschinen nach Anspruch 4,
**dadurch gekennzeichnet,**
**dass** die Haarnadel-Rohrschlange (1) durch ein Rohr gebildet ist, das einen gebogenen Teil (2) und einen gradlinigen Teil (3) aufweist, wobei das erste Metallblech mit dem gebogenen Teil des Rohrs der Haarnadel-Rohrschlange (1) zusammenwirkt und das ebene und auf seinen beiden Seiten mit Klebstoff beschichtete, zweite Metallblech (5) mit dem geradlinigen Teil (3) des Rohrs der Haarnadel-Rohrschlange (1) fest verbunden ist.

## Revendications

1. Procédé de fabrication d'évaporateurs pour des réfrigérateurs, spécialement des réfrigérateurs domestiques, lesdits évaporateurs ayant un serpentin en épingle à cheveu (1) ayant des parties rectilignes (1A) interposées entre et reliées à deux tôles au moyen d'un adhésif et par déformation d'au moins une desdites tôles en correspondance avec des zones de contact avec le serpentin en épingle à cheveu (1), **caractérisé en ce que** le serpentin en épingle à cheveu (1) est relié à une première tôle (4) en déformant cette première tôle par pression du serpentin en épingle à cheveu (1) dans des rainures (10A) d'un outil (10) et ensuite relié à une deuxième tôle (5) ayant deux faces revêtues d'adhésif (5A, 5B), une des faces revêtues d'adhésif (5B) de la deuxième tôle (5) étant utilisée afin de fixer l'évaporateur sur un compartiment de réfrigérateur.

2. Procédé selon la revendication 1, **caractérisé en ce que** la deuxième tôle (5) est protégée sur une face (5B) par une feuille amovible (6) qui repousse l'adhésif.

3. Procédé selon la revendication 2, **caractérisé en ce que** l'outil (10) est pourvu de rainures rectilignes (10A) correspondant sensiblement à des parties rectilignes (1A) du serpentin en épingle à cheveu (1) et à la section à travers le tube relatif, sur ledit outil (10), on dépose en premier la première tôle (4) et ensuite le serpentin en épingle à cheveu (1), dont les parties rectilignes (1A) sont pressées dans lesdites rainures rectilignes (10A) afin d'obtenir une unité ayant une surface exposée sensiblement plate sur laquelle est appliquée la deuxième tôle (5), dont la face extérieure est protégée par la feuille de protection (6).

4. Evaporateur pour des réfrigérateurs, en particulier des réfrigérateurs domestiques, fabriqué selon le procédé de la revendication 1, dans lequel un serpentin en épingle à cheveu (1) est interposé entre deux tôles (4, 5), une première tôle (4) qui a été déformée dans les rainures (10A) d'un outil (10) par pression avec le serpentin en épingle à cheveu (1), ladite première tôle (4) étant pourvue de parties mises en forme qui coopèrent avec le serpentin en épingle à cheveu, la deuxième tôle (5) étant reliée à la première tôle au moyen d'un adhésif, la deuxième tôle (5) étant revêtue d'adhésif des deux côtés (5A, 5B), un (5A) desdits côtés étant plat et étant rigide avec le serpentin en épingle à cheveu et avec la première tôle (4) et l'autre permettant à l'évaporateur d'être fixé sur un élément ou une structure du réfrigérateur.

5. Evaporateur pour des réfrigérateurs selon la revendication 4, **caractérisé en ce que** l'un (5B) des côtés de la deuxième tôle (5) est protégé par une feuille de protection amovible (6).

6. Evaporateur pour des réfrigérateurs selon la revendication 4, **caractérisé en ce que** le serpentin en épingle à cheveu (1) est formé à partir d'un tube ayant une partie courbe (2) et une partie plate (3), la première tôle coopérant avec la partie courbe du tube du serpentin en épingle à cheveu (1), la deuxième tôle (5), qui est plate et revêtue d'adhésif sur ces deux côtés, étant reliée rigidement à la partie plate (2) du tube du serpentin en épingle à cheveu (1).
